(19) Europäisches Patentamt
European Patent Office
Office européen des brevets

(11) **EP 4 302 950 A1**

(12) **EUROPÄISCHE PATENTANMELDUNG**

(43) Veröffentlichungstag:
**10.01.2024 Patentblatt 2024/02**

(21) Anmeldenummer: **23183668.5**

(22) Anmeldetag: **05.07.2023**

(51) Internationale Patentklassifikation (IPC):
**B28B 1/00** (2006.01)   **B28B 23/02** (2006.01)
**B33Y 10/00** (2015.01)   **E04G 21/04** (2006.01)
**B28B 23/00** (2006.01)   **B29C 64/106** (2017.01)
**B29C 64/194** (2017.01)

(52) Gemeinsame Patentklassifikation (CPC):
**B28B 1/001; B28B 23/0062; B28B 23/02;**
**B29C 64/106; B29C 64/209; B33Y 10/00;**
**B33Y 80/00; E04G 21/04;** B33Y 70/10

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **07.07.2022 DE 102022116948**

(71) Anmelder: **Hochschule für angewandte Wissenschaften Augsburg 86161 Augsburg (DE)**

(72) Erfinder:
• **WOHLMANN, Karlheinz 86163 Augsburg (DE)**
• **RUSCH, Tobias 86732 Oettingen (DE)**
• **BRAUNREUTHER, Stefan 82194 Gröbenzell (DE)**
• **BAURIEDEL, Christian 86150 Augsburg (DE)**
• **KERBER, Florian 86150 Augsburg (DE)**

(74) Vertreter: **Hoefer & Partner Patentanwälte mbB Pilgersheimer Straße 20 81543 München (DE)**

(54) **VERFAHREN UND VORRICHTUNG ZUR HERSTELLUNG EINES BAUTEILS**

(57)    Die Erfindung betrifft ein Verfahren zur Herstellung eines Bauteils (1), wobei das Verfahren aufweist: Fertigen (100) zumindest einer Schicht (2) des Bauteils (1), wobei die Schicht(en) (2) zumindest einen Grundwerkstoff des Bauteils (1) aufweist/aufweisen, Bereitstellen (200) zumindest einer Bewehrung (3, 4) in und/oder an zumindest einer Schicht (2) und Ausbilden (300) zumindest eines Schlingenabschnitts (5) der Bewehrung(en) (3, 4) durch Formen oder Verformen zumindest einer Bewehrung (3, 4) innerhalb der/den Schicht(en) (2), sodass sich der Schlingenabschnitt (5) entlang einer Tiefenrichtung (6) der Schicht(en) (2) erstreckt. Die Erfindung betrifft außerdem eine Vorrichtung zur Herstellung von Bauteilen (1) und ein durch das Verfahren und/oder durch die Vorrichtung hergestelltes Bauteil (1).

**Fig. 1**

EP 4 302 950 A1

**Beschreibung**

Die Erfindung betrifft ein Verfahren zur Herstellung eines Bauteils. Die Erfindung betrifft außerdem eine Vorrichtung zur Herstellung von Bauteilen.

Aus US 2017 / 0 182 712 A1 ist ein Verstärkungssystem für additive Fertigung bekannt.

Aus DE 10 2017 126 345 A1 ist ein Verfahren zur Herstellung eines Bauteils aus aushärtbarem Material bekannt.

Aus US 2020 / 0 353 678 A1 ist ein additives Fertigungssystem bekannt.

Aus DE 10 2020 120 895 A1 ist ein Verfahren zur Herstellung eines Formkörpers bekannt.

Aus DE 10 2017 221 661 A1 ist ein Verfahren zur generativen Fertigung eines Werkstücks durch Schmelzschichtung mit struktureller Verstärkung durch Verstärkungselemente oder Verstärkungsgarn bekannt.

Aus dem Stand der Technik, beispielsweise AT 520143 A1 oder EP 3 431 172 A1 sind Verfahren zur Herstellung von additiv gefertigten Bauteilen mit Bewehrung bekannt. Herkömmlicherweise werden insbesondere Betonbauteile dadurch hergestellt, dass die Bewehrung mit Beton umgossen wird. Alternativ werden Bewehrungselemente (beispielsweise Bewehrungsstäbe) in den noch flüssigen Beton eingeführt. Herkömmliche Verfahren zur additiven Fertigung von Bauteilen, insbesondere von Betonbauteilen, haben jedoch den Nachteil, dass es bei diesen Verfahren nicht möglich ist, gleichzeitig mit einem Materialauftrag eine schichtübergreifende und nicht vorkonfektionierte Bewehrung einzubringen. Des Weiteren haben die herkömmlichen additiven Fertigungsverfahren das Problem, dass die nacheinander aufgetragenen Schichten eine geringe Zugfestigkeit, insbesondere zueinander aufweisen. Dadurch können sich die nacheinander aufgetragenen Schichten leicht voneinander lösen und/oder abbrechen.

Es ist Aufgabe der Erfindung ein Verfahren zur Herstellung eines Bauteils bereitzustellen, mit welchem besonders einfach und effizient verstärkte Bauteile hergestellt werden können, die eine besonders hohe Zugfestigkeit aufweisen. Des Weiteren ist es Aufgabe der Erfindung, eine Vorrichtung zur Herstellung von Bauteilen bereitzustellen, welche besonders einfach und effizient verstärkte Bauteile herstellt, die eine besonders hohe Zugfestigkeit aufweisen.

Die Lösung dieser Aufgabe erfolgt durch die Merkmale der unabhängigen Ansprüche. Die Unteransprüche haben bevorzugte Weiterbildungen der Erfindung zum Inhalt.

Das erfindungsgemäße Verfahren zur Herstellung eines Bauteils weist die folgenden Schritte auf:

Zumindest eine Schicht des Bauteils wird gefertigt, wobei die Schicht(en) zumindest einen Grundwerkstoff des Bauteils aufweist/aufweisen. Zumindest eine Bewehrung wird in und/oder an zumindest einer Schicht bereitgestellt. Zumindest ein Schlingenabschnitt der Bewehrung(en) wird durch Formen oder Verformen zumindest einer Bewehrung innerhalb der/den Schicht(en) ausgebildet, sodass sich der Schlingenabschnitt entlang einer Tiefenrichtung der Schicht(en) erstreckt.

Durch das erfindungsgemäße Ausbilden des Schlingenabschnitts ist es möglich, eine Bewehrung bereitzustellen, welche eine besonders hohe Haftreibung innerhalb der/den Schicht(en) aufweist. Dadurch stellt die Bewehrung eine besonders gute Verstärkung mit hoher Zugfestigkeit bereit.

Vorteilhafterweise erfolgt das Ausbilden zumindest eines Schlingenabschnitts der Bewehrung(en) innerhalb der/den Schicht(en) gleichzeitig mit und/oder nach dem Bereitstellen.

Das vorgenannte Ausbilden zumindest eines Schlingenabschnitts der Bewehrung(en) innerhalb der/den Schicht(en) wird vorzugsweise nach dem Bereitstellen der Bewehrung in und/oder an der Schicht durchgeführt. Mit anderen Worten wird vorzugsweise zunächst die Bewehrung angeordnet/bereitgestellt und danach verformt.

Alternativ oder zusätzlich dazu, beispielsweise für (eine) weitere Bewehrung(en), wird das vorgenannte Ausbilden zumindest eines Schlingenabschnitts der Bewehrung(en) innerhalb der/den Schicht(en) vorzugsweise gleichzeitig mit dem Bereitstellen dieser in und/oder an der Schicht durchgeführt. Mit anderen Worten wird die Bewehrung vorzugsweise nicht vor dem Ausbilden des Schlingenabschnitts angeordnet/bereitgestellt. Mit noch anderen Worten wird die Bewehrung mit zumindest einem Schlingenabschnitt vorzugsweise durch das Bereitstellen und/oder bei dem Bereitstellen innerhalb der/den Schicht(en) geformt. Der zumindest eine Schlingenabschnitt wird somit vorteilhafterweise innerhalb der/den Schicht(en) geformt, insbesondere erst innerhalb der/den Schicht(en) geformt.

Vorteilhafterweise wird das vorgenannte Formen oder Verformen des/der Schlingenabschnitte nicht vor dem Bereitstellen derjenigen Bewehrung(en), welche mittels des Verfahrens geformt oder verformt wird/werden, durchgeführt. Mit anderen Worten sind die Schlingenabschnitte insbesondere nicht vorkonfektioniert oder vorgefertigt und werden insbesondere nicht in einem bereits vollständig ausgebildeten Zustand in die Schicht(en) eingeführt oder von Schicht(en) umgossen.

Vorzugsweise ist/sind die Bewehrung(en) kontinuierlich, sodass der Schlingenabschnitt an einem Ende geschlossen ist.

Vorzugsweise ist der Schlingenabschnitt eine einfache Schlinge. Hierbei ist eine einfache Schlinge dadurch gekennzeichnet, dass der Schlingenabschnitt im Wesentlichen eine Halbkreisform entlang der Tiefenrichtung der Schicht(en) aufweist. Mit anderen Worten ragt der Schlingenabschnitt vorsprungsartig in die Schicht(en) hinein, wobei ein Ende dessen geschlossen ist und das andere Ende dessen geschlossen oder geöffnet ist. Vorzugsweise weist der Schlingenabschnitt der einfachen Schlingenform lediglich einen einzigen Umschlingungswinkel auf.

Weiter bevorzugt bildet der Schlingenabschnitt eine mehrfache Schlinge. Dabei wird bevorzugt die vorgenannte einfache Schlinge selbst umschlungen. Mit anderen Worten bildet dabei ein Pfad von dem geschlossenen Ende der Schlinge zu dem anderen Ende (offen oder geschlossen) selbst eine Schlinge, ist also im Wesentlichen selbst U-förmig oder halbkreisförmig. Dahingegen ist der vorgenannte Pfad bei einer einfachen Schlinge im Wesentlichen eine gerade Linie. Vorzugsweise weist der Schlingenabschnitt der mehrfachen Schlingenform eine Mehrzahl, insbesondere zwei oder mehr, bevorzugt drei oder mehr, bevorzugt vier oder mehr, Umschlingungswinkel auf.

In einer bevorzugten Ausführungsform wird in dem Schritt des Ausbildens des Schlingenabschnitts die Bewehrung zusammen mit einem länglichen Werkzeug in die Schicht(en) gedrückt. Daraufhin wird das Werkzeug zumindest teilweise aus der/den Schicht(en) herausgezogen. Hierdurch können der/die Schlingenabschnitt(e) vorteilhafterweise innerhalb der/den Schicht(en) durch Formen oder Verformen der Bewehrung(en) gebildet werden.

Das vorgenannte Drücken des länglichen Werkzeuges in die Schicht(en) und das vorgenannte Herausziehen dessen aus der/den Schicht(en) erfolgt insbesondere mittels einer Hin- und Rückbewegung.

Die vorgenannte Hin- und Rückbewegung erfolgt vorzugsweise an einer gleichen Stelle der Schicht(en). Mit anderen Worten wird das längliche Werkzeug dabei zwischen dem Hineindrücken und dem Herausziehen nicht zusätzlich in einer weiteren Richtung, beispielsweise parallel zu einer Oberfläche der Schicht(en) bewegt. Mit noch anderen Worten ist vorzugsweise eine Einstichstelle des länglichen Werkzeugs in die Schicht(en) gleich einer Austrittsstelle des länglichen Werkzeugs, an welcher das längliche Werkzeug herausgezogen wird.

Vorzugsweise wird die vorgenannte Hin- und Rückbewegung des Werkzeugs nicht an einer gleichen Stelle der Schicht(en) durchgeführt. Mit anderen Worten wird das Werkzeug zusammen mit der Bewehrung an einer Stelle der Schicht(en) eingeführt (Hinbewegung) und an einer anderen Stelle herausgezogen (Rückbewegung). Dadurch kann eine Länge in Draufsicht und/oder grundsätzliche Form des Schlingenabschnitts weiter angepasst werden. Mit noch anderen Worten sind die vorgenannte Einstichstelle und die vorgenannte Austrittsstelle nicht gleich.

Bevorzugt weist das Werkzeug einen bogenförmigen Abschnitt auf. Dadurch ist es insbesondere möglich, den Schlingenabschnitt mit einer mehrfachen Schlinge zu bilden, insbesondere mittels einer einfachen Hin- und Rückbewegung des Werkzeugs.

Vorzugsweise ist das Werkzeug eine spitze Nadel. Dadurch kann das Werkzeug besonders einfach und mit geringer Krafteinwirkung auch in Schicht(en) des Bauteils eingeführt werden, welche eine hohe Viskosität aufweisen.

Bevorzugt ist das Werkzeug eine spitze Nadel, welche innen hohl und eingerichtet ist, innen die Bewehrung aufzunehmen. Mit anderen Worten ist das Werkzeug dazu eingerichtet, die Bewehrung in einem inneren Hohlraum dessen aufzunehmen. Dadurch wird insbesondere ermöglicht, gleichzeitig die Bewehrung bereitzustellen und den Schlingenabschnitt auszubilden. Dabei wird insbesondere die Bewehrung durch die hohle Nadel bereitgestellt und innerhalb der Schicht(en) geformt, um einen Schlingenabschnitt auszubilden.

In einer besonderen Ausführungsform weist die Bewehrung außerhalb des Schlingenabschnitts zumindest einen Längsabschnitt mit einer Längserstreckungsrichtung auf. In dem Schritt des Ausbildens des Schlingenabschnitts wird bevorzugt eine Längserstreckungsrichtung des Schlingenabschnitts mit einem Nickwinkel zur Längserstreckungsrichtung des Längsabschnitts ausgebildet. Der Nickwinkel ist mit Bezug auf eine Draufsicht parallel zur Tiefenrichtung auf eine Oberfläche der Schicht(en) definiert. Mit anderen Worten lässt sich zwischen einem Abschnitt der Bewehrung vor dem Schlingenabschnitt und einem Abschnitt der Bewehrung nach dem Schlingenabschnitt eine Verbindungslinie definieren, welche der Längserstreckungsrichtung der Bewehrung entspricht. Der Schlingenabschnitt wird bevorzugt mit einem Nickwinkel zu dieser Längserstreckungsrichtung ausgebildet.

Bevorzugt wird der Nickwinkel des Schlingenabschnitts durch einen vordefinierten Nickwinkel des länglichen Werkzeugs zur Längserstreckungsrichtung der Bewehrung definiert bzw. gebildet. In dem beispielhaften Fall, in welchem die Bewehrung in und/oder an zumindest der Schicht bereitgestellt wird, bevor der Schlingenabschnitt ausgebildet wird, weist das längliche Werkzeug zum Ausbilden des Nickwinkels diesen Nickwinkel zur Längserstreckung der bereitgestellten Bewehrung auf.

In dem beispielhaften Fall des Formens, in welchem gleichzeitig die Bewehrung bereitgestellt und mit einem Schlingenabschnitt ausgebildet wird (beispielsweise in dem Fall der hohlen Nadel), wird das Werkzeug, bevorzugt die hohle Nadel, zum Bereitstellen der Längsabschnitte der Bewehrung gerade entlang der/den Schicht(en) geführt und zur Bereitstellung des Schlingenabschnitts mit dem Nickwinkel um diesen Nickwinkel entsprechend gedreht, bevor es in die Schicht(en) eingeführt wird. Bei dem Herausziehen des Werkzeugs aus der/den Schicht(en) wird das Werkzeug bevorzugt wieder in die gerade Ausrichtung versetzt. Alternativ oder zusätzlich dazu (beispielsweise an anderen Schlingenabschnitten) wird das Werkzeug bevorzugt unter diesem Nickwinkel wieder aus der/den Schicht(en) herausgezogen und bevorzugt erst nach dieser Rückbewegung wieder in die gerade Lage versetzt.

Vorzugsweise wird die zumindest eine Bewehrung in den Schritten des Fertigens zumindest einer Schicht des Bauteils und des Bereitstellens der zumindest einen Bewehrung integral mit dem Grundwerkstoff zugeführt und bereitgestellt. Mit anderen Worten wird dabei bevorzugt das Fertigen der zumindest einen Schicht des Bauteils und das Bereitstellen der zumindest einen Bewehrung gleichzeitig durchgeführt. Hierbei wird beispielsweise eine Druckvorrichtung verwendet, welche die zumindest eine Schicht des Bauteils zusammen mit der Bewehrung druckt.

Vorzugsweise wird in den Schritten des Fertigens der zumindest einen Schicht des Bauteils und des Bereitstellens der Bewehrung die zumindest eine Bewehrung getrennt von dem Grundwerkstoff zugeführt und bereitgestellt. Dies erfolgt beispielsweise dadurch, dass die zumindest eine Schicht des Bauteils gefertigt und/oder gedruckt wird und daraufhin die Bewehrung in und/oder an zumindest der gefertigten Schicht eingelegt und/oder draufgelegt wird.

Bevorzugt werden die Schritte des Fertigens der Schicht des Bauteils, des Bereitstellens der Bewehrung und des Ausbildens des Schlingenabschnitts wiederholt. Dabei werden insbesondere die Schritte des Ausbildens des Schlingenabschnitts zwischen dem jeweiligen Fertigen von mehreren Schichten durchgeführt. Mit anderen Worten wird bevorzugt zumindest eine Schicht des Bauteils gefertigt, entweder gleichzeitig oder danach die zumindest eine Bewehrung in und/oder an der Schicht bereitgestellt und gleichzeitig und/oder danach der zumindest eine Schlingenabschnitt der Bewehrung ausgebildet und dann eine weitere Schicht des Bauteils gefertigt. Alternativ oder zusätzlich dazu wird bevorzugt zumindest eine erste Schicht des Bauteils gefertigt und danach zumindest eine Bewehrung in und/oder an der zumindest einen Schicht bereitgestellt. Daraufhin wird bevorzugt zumindest eine weitere Schicht des Bauteils gefertigt. Daraufhin wird bevorzugt der zumindest eine Schlingenabschnitt in der Bewehrung gefertigt, insbesondere zum Verbinden der mehreren Schichten durch den Schlingenabschnitt der Bewehrung. Diese Prozesse können beliebig wiederholt werden bis das Bauteil vollständig gefertigt ist. Weitere Prozessschritte wie etwa das Aushärten und/oder Trocknen und/oder Behandeln der Schichten des Bauteils können zwischen und/oder nach den vorgenannten Schritten durchgeführt werden.

Vorzugsweise umschlingt zumindest ein Schlingenabschnitt zumindest einer der Bewehrungen zumindest eine weitere Bewehrung zumindest teilweise.

Bevorzugt werden mehrere Bewehrungen in und/oder an zumindest einer Schicht bereitgestellt. Bevorzugt werden Schlingenabschnitte in manche, beispielsweise in jeder zweiten, Bewehrung bereitgestellt. Dabei umschlingen die gebildeten Schlingenabschnitte vorzugsweise die Bewehrungen, in welchen keine Schlingenabschnitte gebildet werden.

Vorzugsweise umschlingen die gebildeten Schlingenabschnitte einer Bewehrung weitere Bewehrungen, in welchen ebenfalls Schlingenabschnitte gebildet werden (wurden). Dabei umschlingen bevorzugt die Schlingenabschnitte einer ersten Bewehrung die Längsabschnitte (beispielsweise zwischen den Bewehrungen und/oder an den Enden der Bewehrung) der weiteren Bewehrung. Bevorzugt umschlingen die Schlingenabschnitte einer Bewehrung die Schlingenabschnitte der weiteren Bewehrung.

Die vorliegende Erfindung betrifft außerdem eine Vorrichtung zur Herstellung von Bauteilen. Die Vorrichtung weist zumindest eine Druckvorrichtung auf, welche eingerichtet ist, zumindest eine Schicht aus zumindest einem Grundwerkstoff zuzuführen. Die Vorrichtung weist zumindest eine Bewehrungszufuhrvorrichtung auf, welche eingerichtet ist, zumindest eine Bewehrung in und/oder an der/den Schicht(en) anzuordnen. Die Vorrichtung ist außerdem durch eine Schlingenbildungsvorrichtung gekennzeichnet, welche eingerichtet ist, zumindest eine Bewehrung, insbesondere abschnittsweise, in eine Tiefe der Schicht(en) zu drücken und in der/den Schicht(en) zu formen oder zu verformen, sodass die Bewehrung(en) einen Schlingenabschnitt aufweist/aufweisen.

Die Vorrichtung zur Herstellung von Bauteilen ist insbesondere dazu eingerichtet, das vorgenannte Verfahren zur Herstellung eines Bauteils durchzuführen. Bevorzugt ist dabei die Schlingenbildungsvorrichtung der Vorrichtung das in dem Verfahren verwendete Werkzeug, insbesondere mit einem bogenförmigen Abschnitt und/oder die spitze Nadel, beispielsweise mit dem inneren Hohlraum.

Vorzugsweise sind die zumindest eine Druckvorrichtung und die zumindest eine Bewehrungszufuhrvorrichtung miteinander integriert. Beispielsweise ist die Druckvorrichtung dazu eingerichtet, den Grundwerkstoff des Bauteils und die zumindest eine Bewehrung gleichzeitig zuzuführen und anzuordnen.

Vorzugsweise ist die Schlingenbildungsvorrichtung mit der Bewehrungszufuhrvorrichtung integriert. Beispielsweise ist die Bewehrungszufuhrvorrichtung eingerichtet, die zumindest eine Bewehrung anzuordnen und in die Tiefe der Schicht zu drücken und dabei/dadurch den/die Schlingenabschnitt(e) zu formen. Ein Beispiel hierfür ist die vorgenannte Nadel mit dem Hohlraum.

Die Schicht(en) weisen bevorzugt Mörtel und/oder Beton, insbesondere als Grundwerkstoff, auf. Diese sind bevorzugt auf Basis von mineralischen Bindemitteln wie etwa Zement, Kalk und/oder Gips gebildet. Alternativ oder zusätzlich dazu weisen die Schicht(en) Kunststoff und/oder Harz, insbesondere als Grundwerkstoff, auf.

Die Bewehrung(en) sind bevorzugt aus zugfesten und biegeweichen Werkstoffen gebildet. Die Bewehrung(en) weisen bevorzugt Flechtkordeln und/oder Rovings auf. Diese sind bevorzugt auf Basis von Stahl und/oder Kohlefasern und/oder Carbon und/oder Basalt und/oder Glasfasern gebildet.

Bevorzugt umfasst die Bewehrungszufuhrvorrichtung ein Magazin, in welchem die Bewehrung(en) gehalten werden, beispielsweise auf Rollen und/oder Spulen.

Bevorzugt eilt die Schlingenbildungsvorrichtung der Druckvorrichtung hinterher. Weiter bevorzugt eilt die Schlingenbildungsvorrichtung der Bewehrungszufuhrvorrichtung hinterher. Alternativ oder zusätzlich dazu eilt die Schlingenbildungsvorrichtung bevorzugt der Druckvorrichtung voraus. Hierbei werden die Schlingenabschnitte in einer früheren Schicht gebildet, bevor die Druckvorrichtung die nächste, spätere Schicht fertigt.

Die Erfindung betrifft außerdem ein durch das Verfahren hergestelltes Bauteil. Des Weiteren betrifft die vorliegende Erfindung ein von der Vorrichtung hergestelltes Bauteil.

Weitere Einzelheiten, Vorteile und Merkmale der vorliegenden Erfindung ergeben sich aus nachfolgender Beschreibung von Ausführungsbeispielen anhand der Zeichnung. Es zeigt:

Fig. 1 eine schematische seitliche Schnittansicht eines teilweise hergestellten Bauteils, welches mittels eines Verfahrens und einer Vorrichtung gemäß einer ersten Ausführungsform der vorliegenden Erfindung hergestellt wurde;

Fig. 2 eine schematische seitliche Schnittansicht eines Bauteils nach einem Zwischenschritt des Verfahrens gemäß der ersten Ausführungsform der vorliegenden Erfindung;

Fig. 3 bis 6 schematische seitliche Schnittansichten eines Bauteils, welche einen Bewegungsablauf eines Werkzeugs während eines Zwischenschritts des Verfahrens gemäß der ersten Ausführungsform der vorliegenden Erfindung darstellen;

Fig. 7 eine schematische Draufsicht eines Bauteils, welche einen modifizierten Bewegungsablauf des Werkzeugs während der in den Fig. 4 bis 5 dargestellten Zwischenschritte des Verfahrens darstellt;

Fig. 8 eine schematische Detailansicht eines Werkzeugs, welches in einem Verfahren oder in einer Vorrichtung gemäß einer zweiten Ausführungsform der vorliegenden Erfindung verwendet wird;

Fig. 9 ein erläuterndes schematisches Diagramm einer seitlichen Schnittansicht des Bauteils zur Erläuterung des Verfahrens und der Vorrichtung gemäß den Ausführungsformen der vorliegenden Erfindung;

Fig. 10 ein weiteres erläuterndes schematisches Diagramm einer seitlichen Schnittansicht des Bauteils zur Erläuterung des Verfahrens und der Vorrichtung gemäß den Ausführungsformen der vorliegenden Erfindung; und

Fig. 11 ein schematisches Blockdiagramm des Verfahrens gemäß den Ausführungsformen der vorliegenden Erfindung.

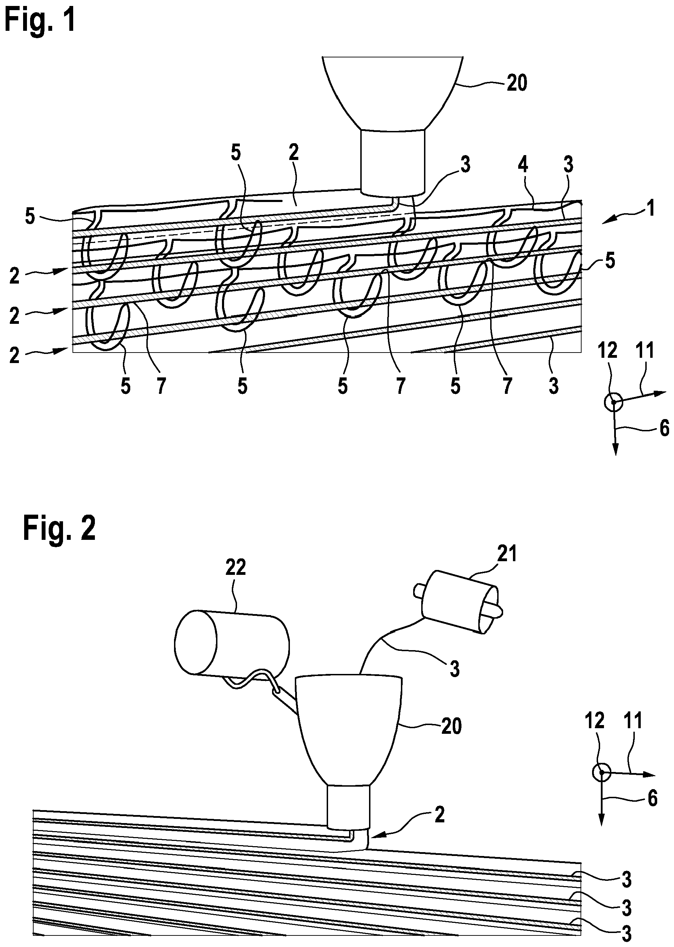

Fig. 1 zeigt eine schematische seitliche Schnittansicht eines teilweise hergestellten Bauteils 1, welches mittels eines Verfahrens und einer Vorrichtung gemäß einer ersten Ausführungsform der vorliegenden Erfindung hergestellt wurde.

Genauer zeigt die Fig. 1 das teilweise hergestellte Bauteil 1 sowie einen Teil der Vorrichtung, welche das Verfahren durchführt. In Fig. 1 ist eine Druckvorrichtung 20 dargestellt, welche Schichten 2 des Bauteils 1 zuführt und/oder fertigt.

Die Schichten 2 werden zur additiven Herstellung des Bauteils 1 nacheinander und aufeinander aufgetragen. Hierbei weisen die Schichten 2 einen Grundwerkstoff des Bauteils 1 auf.

In dieser Ausführungsform weist der Grundwerkstoff des Bauteils 1 beispielsweise Mörtel und/oder Beton, beispielsweise auf Basis von mineralischen Bindemitteln (Zement, Kalk, Gips) auf. Das durch das nachstehend beschriebene Verfahren hergestellte Bauteil 1 ist beispielsweise ein großformatiges Betonbauteil 1, welches üblicherweise ein Volumen von ca. 0,1 - 5 cm$^3$ aufweist. In den nachstehenden Erläuterung wird angenommen, dass der Grundwerkstoff des Bauteils 1 zumindest teilweise (beispielsweise in den oberen Schichten 2) in fluider Form vorliegt, also insbesondere nicht oder noch nicht ausgehärtet ist.

Die Schichten 2 weisen gemäß dieser Ausführungsform Bewehrungen 3 auf. Zur Unterscheidung von den nachstehend beschriebenen Bewehrungen 4 werden diese Bewehrungen 3 auch als "erste Bewehrung" bezeichnet, wobei die nachstehend beschriebenen Bewehrungen 4 auch als "zweite Bewehrung" bezeichnet werden. Die Unterscheidung der ersten Bewehrungen 3 und der zweiten Bewehrungen 4 erfolgt anhand der nicht vorhandenen beziehungsweise der vorhandenen Schlingenabschnitte 5, welche nachstehend erläutert werden. Die ersten Bewehrungen 3 weisen in Fig. 1 keine Schlingenabschnitte 5 auf, während die zweiten Bewehrungen 4 Schlingenabschnitte 5 aufweisen. Die erste Bewehrung 3 und die zweite Bewehrung 4 können aus den gleichen oder aus verschiedenen Materialien hergestellt sein.

Wie in Fig. 1 dargestellt wird die erste Bewehrung 3 integral mit dem Grundwerkstoff des Bauteils 1 aufgetragen. Hierbei wird der Druckvorrichtung 20 gleichzeitig die Bewehrung 3 mit dem Grundwerkstoff zugeführt. Hierfür kann die Vorrichtung beispielsweise einen Behälter 22 für den Grundwerkstoff (siehe Fig. 2) und eine Zufuhrvorrichtung 21 aufweisen, welche der Druckvorrichtung 20 die Bewehrung 3 zuführt. Die Zufuhrvorrichtung 21 weist insbesondere eine Rolle oder Trommel auf, auf welcher die Bewehrung 3 gewickelt ist. Die Zufuhrvorrichtung 21 und der Behälter 22 können miteinander kombiniert, insbesondere einteilig gebildet, sein. Hierbei kann der Behälter 22 die Zufuhrvorrichtung 21 aufweisen. Die Zufuhrvorrichtung 21 kann dabei in dem Behälter 22 aufgenommen sein.

Alternativ oder zusätzlich dazu können die Bewehrungen 3 oder weitere Bewehrungen 3 getrennt von dem Grundwerkstoff zugeführt werden. Die Bewehrungen 3 sind in einem solchen Fall beispielsweise Stäbe, welche in den Grundwerkstoff eingeführt werden.

Bevorzugt weisen die zweiten Bewehrungen 4 zugfeste und biegeweiche Werkstoffe auf. Beispielsweise weisen die zweiten Bewehrungen 4 zumindest einen Roving oder Flechtkordeln aus Fasern auf, insbesondere aufweisend Glas, Aramid, Stahl, Basalt und/oder Kohlenstoff. Die zweiten Bewehrungen 4 weisen bevorzugt zumindest ein Stahldraht und/oder Schnüre und/oder Seile, beispielsweise aus Natur- und/oder Kunstfasern, auf. Die ersten Bewehrungen 3 weisen bevorzugt ebenfalls eines der vorgenannten Materialien auf. Alternativ oder zusätzlich dazu können die ersten Bewehrungen 3 beispielsweise Stahlstäbe aufweisen.

Die zweiten Bewehrungen 4 weisen, wie in Fig. 1 dargestellt, Schlingenabschnitte 5 auf. Die Schlingenabschnitte 5 erstrecken sich jeweils entlang einer Tiefenrichtung 6 der Schichten 5.

Dabei ragt ein Schlingenabschnitt 5 aus einer Schicht 2 zumindest in eine nächste, darunterliegende Schicht 2 hinein. Die Tiefenrichtung 6 ist hierbei eine Stapelrichtung der Schichten 5. Die zweiten Bewehrungen 4 sind vorzugsweise kontinuierlich, sodass die Schlingenabschnitte 5 an einem Ende 7 geschlossen sind.

Die Schlingenabschnitte 5 der zweiten Bewehrung 4 umschlingen dabei die erste Bewehrung 3. Insbesondere umschlingen die Schlingenabschnitte 5 der zweiten Bewehrung 4 einer Schicht 2 die erste Bewehrung 3 einer darunterliegenden weiteren Schicht 2. Die Schlingenabschnitte 5 der zweiten Bewehrung 4 können auch mehrere erste Bewehrungen 3, aus verschiedenen oder aus einer gleichen Schicht 2, umschlingen.

Es können auch bevorzugt mehrere erste Bewehrungen 3 in einer Schicht 2 angeordnet sein.

Des Weiteren können bevorzugt auch mehrere zweite Bewehrungen 4 in einer Schicht 2 angeordnet sein. In dem Fall, in welchem in einer Schicht 2 nur eine erste Bewehrung 3 angeordnet ist, können die zweiten Bewehrungen 4 mehrere dieser ersten Bewehrungen 3 aus verschiedenen Schichten 2 umschlingen, also in/durch mehrere Schichten 2 ragen. In dem Fall, in welchem in einer Schicht 2 mehr als eine erste Bewehrung 3 angeordnet ist, können die zweiten Bewehrungen 4 diese mehreren ersten Bewehrungen 3 aus einer Schicht 2 umschlingen und/oder auch mehrere erste Bewehrungen 3 aus verschiedenen Schichten 2 umschlingen.

Nachfolgend werden mit Bezug auf die Fig. 2 bis 6 verschiedene Schritte und Zwischenschritte des Verfahrens zur Herstellung des Bauteils 1 erläutert.

Zunächst werden, wie in Fig. 2 dargestellt, mehrere Schichten 2 des Bauteils 1 gefertigt und aufgetragen. Hierbei werden die Schichten 2 des Grundwerkstoffs integral mit der Bewehrung 3 aufgetragen. Genauer wird in Fig. 2 ein Zwischenschritt dargestellt, in welchem zu dem Zeitpunkt der Fig. 2 eine (weitere) Schicht 2 gefertigt und aufgetragen wird. Alternativ kann die Druckvorrichtung 20 den Grundwerkstoff auftragen, ohne dabei die Bewehrung 3 aufzutragen. Die Bewehrung 3 kann dabei durch eine weitere Zufuhrvorrichtung auf die Schichten 2 aufgetragen oder in die Schichten 2 eingebracht werden.

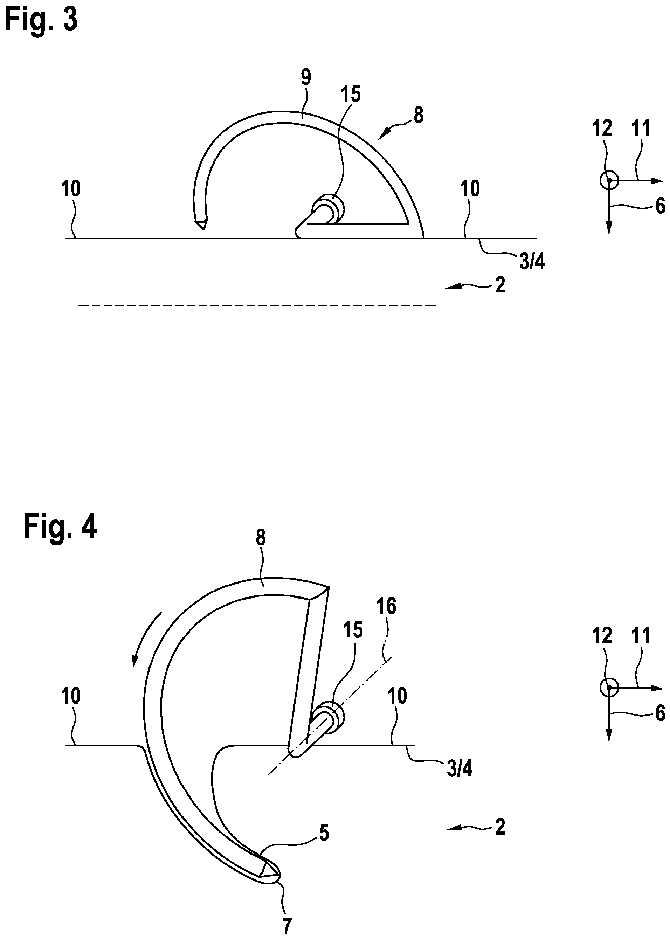

Die Fig. 3 bis 6 zeigen einen Ablauf von Zwischenschritten dieser Ausführungsform, mit welchen die Schlingenabschnitte 5 gebildet werden. Die Schlingenabschnitte 5 können in den Bewehrungen 3 der Fig. 2 gebildet werden. Alternativ oder zusätzlich dazu können zunächst weitere Bewehrungen (zweite Bewehrungen 4 in Fig. 1) angeordnet werden, beispielsweise zwischen und/oder in den einzelnen Schichten 2, in welchen die Schlingenabschnitte 5 gebildet werden.

Wie in Fig. 3 dargestellt, wird zunächst ein längliches Werkzeug 8 auf der Schicht 2 angeordnet. Mögliche weitere, darunterliegende Schichten 2 sind zur besseren Übersicht hier nicht dargestellt, können jedoch vorhanden sein.

Das längliche Werkzeug 8 ist gemäß dieser Ausführungsform eine spitze Nadel 8 mit einem bogenförmigen Abschnitt 9. Durch die spitze Form der Nadel 8 wird gewährleistet, dass möglichst wenig Grundwerkstoff, insbesondere Beton, durch die Nadel 8 in den nachstehenden Zwischenschritten verdrängt wird. Die Nadel 8 wird an einer Kopplungsstelle 15 von der Vorrichtung (nicht dargestellt) gehalten und durch diese geführt. Die Nadel 8 ist dabei auf einer Linearachse gelagert, um entlang einer Längserstreckungsrichtung 11 der Bewehrung 3, 4 bewegbar zu sein.

Die Nadel 8 ist bevorzugt zusammen mit der Druckvorrichtung 20 geführt, insbesondere entlang der Längserstreckungsrichtung 11 der Bewehrung 3, 4 hinter der Druckvorrichtung 20 geführt. Mit anderen Worten eilt die Nadel 8 der Druckvorrichtung 20 nach. Die Nadel 8 ist bevorzugt integral mit der Druckvorrichtung 20 gebildet oder an dieser befestigt.

Wie in Fig. 4 dargestellt wird die Nadel 8 um eine Drehachse 16 gedreht. Dadurch drückt die Nadel 8 die Bewehrung 3, 4 in Tiefenrichtung 6 in die Schicht 2. Bereits an dieser Stelle wird somit ein Schlingenabschnitt 5 durch Verformen der Bewehrung 3, 4 innerhalb der Schicht 2 gebildet. Die Bereiche 10 außerhalb des Schlingenabschnitts 5, insbesondere zwischen zwei benachbarten Schlingenabschnitten 5, werden als Längsabschnitte 10 der Bewehrung 3, 4 bezeichnet.

Vorteilhafterweise ist die Bewehrung 3, 4, welche durch die Nadel 8 in die Tiefe 6 gedrückt wird, nicht oder nur gering gespannt, sodass die Bewehrung 3, 4 von der Nadel 8 mitgeführt und nachgezogen wird.

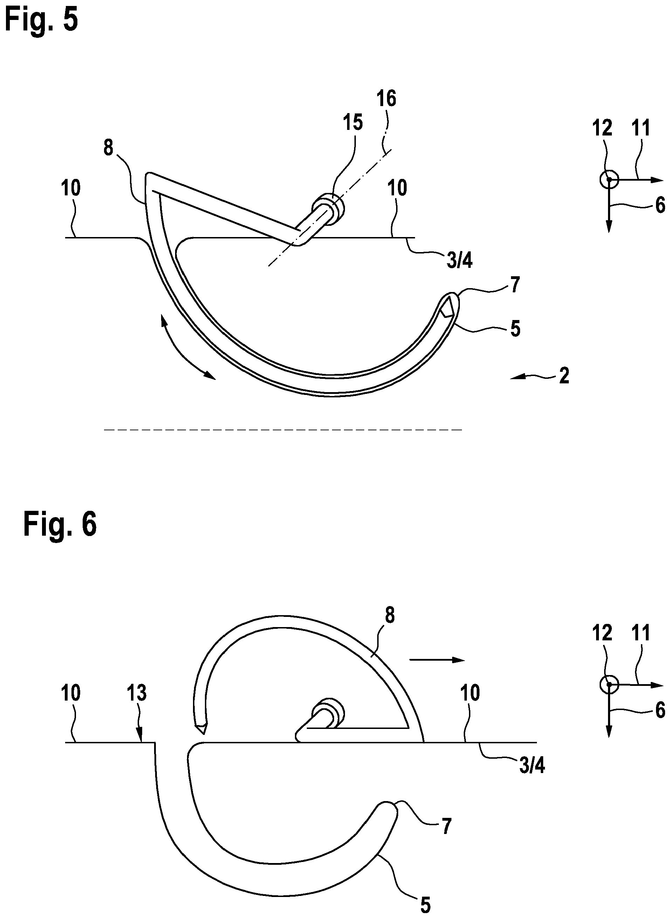

Die Nadel 8 wird in Fig. 5 weiter um die Drehachse 16 gedreht, bis eine vordefinierte Länge bzw. Tiefe des Schlingenabschnitts 5 erreicht ist.

Daraufhin wird die Nadel 8, durch Drehen um die Drehachse 16 in die gegensätzliche Richtung, wieder aus der Schicht 2 herausgezogen. Dies ist in Fig. 6 dargestellt. Der Schlingenabschnitt 5 der Bewehrung 3, 4 verbleibt dabei in der Schicht 2, insbesondere aufgrund einer Haftreibung zwischen der Bewehrung 3, 4 und der Schicht 2.

Nachdem die Nadel 8 herausgezogen wurde, kann diese entlang der Längserstreckungsrichtung 11 der Längsabschnitte 10 der Bewehrung 3, 4 weiter auf einer Oberfläche 13 der Schicht(en) 2 bewegt werden, um an weiteren Stellen Schlingenabschnitte 5 zu bilden.

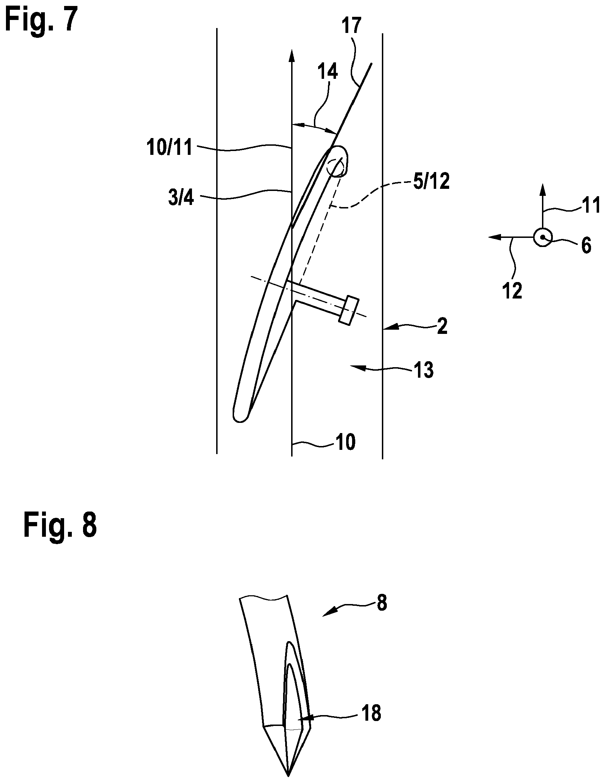

Fig. 7 zeigt eine schematische Draufsicht des Bauteils 1, welche einen modifizierten Bewegungsablauf des Werkzeugs 8 während der in den Fig. 4 bis 6 dargestellten Zwischenschritte des Verfahrens darstellt.

In der Draufsicht der Fig. 7 ist eine oberste Schicht 2 dargestellt, auf welcher oder in welcher eine Bewehrung 3, 4 angeordnet ist. Die Fig. 7 zeigt insbesondere einen Zwischenschritt entsprechend den Fig. 3 und 6, in welchem also die Nadel 8 auf einer Oberfläche 13 der Schicht 2 angeordnet ist.

Hierbei wird das Werkzeug 8, nämlich die Nadel 8, mit einem Nickwinkel 14 zur Längserstreckungsrichtung 11 der Längsabschnitte 10 der Bewehrung 3, 4 ausgerichtet. Dadurch wird ein Schlingenabschnitt 5 gebildet, welcher, in der Draufsicht parallel zur Tiefenrichtung 6 auf die Oberfläche 13 der Schichten 2, einen Nickwinkel 14 aufweist. Mit anderen Worten wird hierbei die Nadel 8 derart ausgerichtet, dass ihre Längserstreckungsrichtung 17, als Projektion in Draufsicht, den Nickwinkel 14 zur Längserstreckungsrichtung 11 der Längsabschnitte 10 der Bewehrung 3, 4 aufweist.

Dieser modifizierte Bewegungsablauf hat den Vorteil, dass die Nadel 8 zusammen mit der mitgeführten Bewehrung 3, 4 nicht gegen weitere darunterliegende Bewehrungen 3, 4, welche nicht mitgeführt werden, stößt. Des Weiteren umschlingt ein derart gebildeter Schlingenabschnitt 5 die darunterliegende Bewehrung(en) 3, 4 auch entlang einer Richtung 12 senkrecht zur Tiefenrichtung 6 und senkrecht zur Längserstreckungsrichtung 10. Die Richtung 12 ist parallel zu einer Breite der Schicht(en) 2. Mit anderen Worten befindet sich sodann, als Projektion in Draufsicht, ein Abschnitt des Schlingenabschnitts 5 unterhalb (in Tiefenrichtung 6) der darunterliegenden Bewehrung 3, 4, welche hierbei nicht verformt wurde.

Ein maximaler Nickwinkel 14 wird dabei derart eingestellt, dass die Nadel 8 entlang der Richtung 12 nicht aus der Schicht 2 austritt.

Zum Greifen und Mitführen der Bewehrung 3, 4 unter einem solchen Nickwinkel 14 kann die Bewehrung 3, 4 mit der Spitze der Nadel 8 angestochen und/oder durchstochen werden. Durch eine besonders glatte Oberfläche der Nadel 8 wird erreicht, dass die Bewehrung 3, 4 beim Herausziehen der Nadel 8 nicht wieder mit-herausgezogen wird.

Alternativ dazu kann die Nadel 8, insbesondere an ihrer Spitze, eine Öse (nicht dargestellt) aufweisen, durch welche die Bewehrung 3, 4 verläuft und mittels welcher die Bewehrung 3, 4 während des Ein- und Ausführens der Nadel 8 geführt ist.

Alternativ oder zusätzlich dazu kann die Nadel 8, insbesondere die Spitze der Nadel 8, ähnlich einer Häkelnadel, insbesondere ähnlich einer Spitze einer Häkelnadel, geformt sein und die Bewehrung 3, 4 beim Bilden des Schlingenabschnitts 5 führen. Mit anderen Worten weist die Nadel 8 bevorzugt einen Haken an ihrer Spitze auf, welcher eingerichtet ist, die Bewehrung 3, 4 während des Ein- und Ausführens der Nadel 8 zu führen. Das gleichzeitige Führen bzw. Bereitstellen der Bewehrung 3, 4 mit dem Ausbilden des Schlingenabschnitts 5 wird auch als "Formen" der zumindest einen Bewehrung 3, 4 innerhalb der/den Schichten 2 bezeichnet.

Fig. 8 zeigt eine schematische Detailansicht eines Werkzeugs 8, welches in einem Verfahren oder in einer Vorrichtung gemäß einer zweiten Ausführungsform der vorliegenden Erfindung verwendet wird.

Im Detail wird in der Fig. 8 eine Spitze der Nadel 8 dargestellt. Hierbei ist die Nadel 8 hohl ausgebildet. Des Weiteren weist die Nadel 8 eine Öffnung 18 an ihrer Spitze auf.

Dadurch kann die Bewehrung 3, 4 durch einen Innenraum der Nadel 8 geführt sein. Durch die Haftreibung der Bewehrung 3, 4 an der Schicht 2 wird die Bewehrung 3, 4 durch die Nadel 8 hindurch nachgezogen, wenn diese in die Schicht 2 ein- und hinausgeführt wird.

Die hohle Nadel 8 wird bevorzugt mit der vorgenannten Öse und/oder dem vorgenannten Haken kombiniert, um eine möglichst gute Führung der Bewehrung 3, 4 zu ermöglichen, insbesondere um eine Haftreibung zwischen der Nadel 8 und der Bewehrung 3, 4 zu verringern, sodass die Bewehrung 3, 4 in der Schicht 2 verbleibt (Haftreibung der Bewehrung 3, 4 zur Schicht 2 größer als Haftreibung zur Nadel 8).

Hierbei wird vorteilhafterweise die Bewehrung 3, 4 gleichzeitig in und/oder an zumindest einer Schicht 2 bereitgestellt und zumindest ein Schlingenabschnitt 5 der Bewehrung 3, 4 gebildet. Dabei wird die Bewehrung 3, 4 innerhalb der/den Schicht(en) geformt.

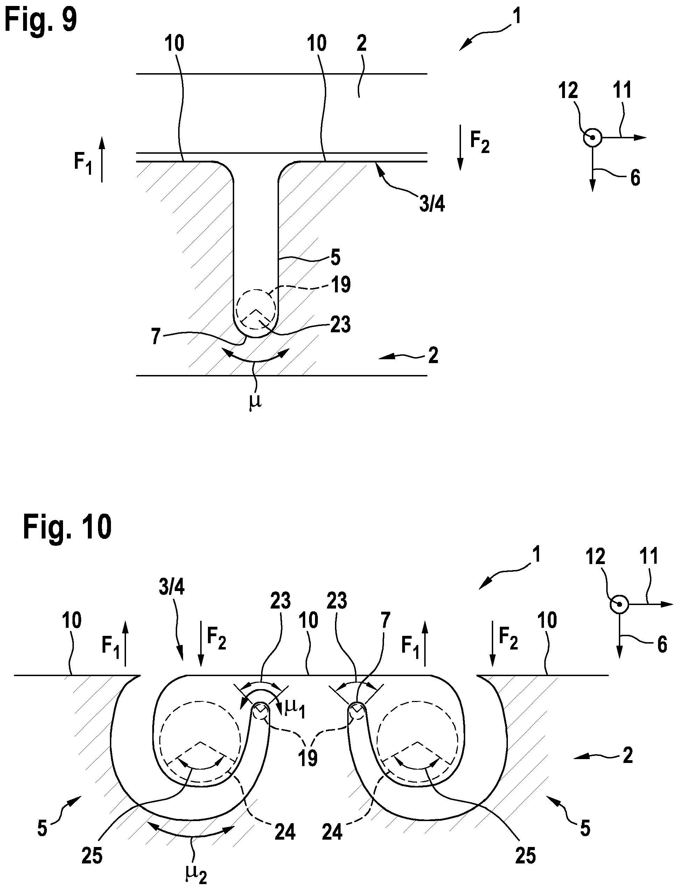

Fig. 9 zeigt ein erläuterndes schematisches Diagramm einer seitlichen Schnittansicht des Bauteils 1 zur Erläuterung des Verfahrens und der Vorrichtung gemäß den Ausführungsformen der vorliegenden Erfindung.

Fig. 9 ist genauer ein schematisches Diagramm zur Erläuterung der Wirkung des Schlingenabschnitts 5. Hierin ist ein einfacher Schlingenabschnitt 5 dargestellt, welcher eine einzige Halbumrundung mittels des geschlossenen Endes aufweist.

Dabei ist der Schlingenabschnitt 5, genauer das geschlossene Ende 7 des Schlingenabschnitts 5, um einen gedachten Poller 19 geschlungen. Die Haftreibung zwischen dem Schlingenabschnitt 5 und der Schicht 2 ist in Fig. 9 mit "$\mu$" bezeichnet. In dem gedachten Poller 19 ist ein Umschlingungswinkel 23 dargestellt.

Gemäß der Euler-Eytelwein-Formel (Seilreibungsformel) gilt für Zugkräfte $F1$ und $F2$ an der Bewehrung 3, 4:

$$F_2 = F_1 * e^{\mu H * \alpha}$$

Wobei in obiger Formel "α" den Umschlingungswinkel 23 in Fig. 9 und "$\mu_H$" den Haftreibungskoeffizienten ("μ" in Fig. 9) bezeichnet.

Die vorgenannten Zugkräfte $F_1$ und $F_2$ sind in Fig. 9 dargestellt. Durch die Ausrichtung des Schlingenabschnitts 5 in Tiefenrichtung 6, also durch eine Umlenkung des Schlingenabschnitts 5 von der Längserstreckungsrichtung 11 in die Tiefenrichtung 6, erzeugt die Haftreibung μ des Schlingenabschnitts 5 einen Widerstand der Schicht 2 gegen die Zugkräfte $F_1$ und $F_2$.

Der in Fig. 9 dargestellte einfache Schlingenabschnitt 5 wird bevorzugt ebenfalls durch ein längliches Werkzeug 8 durch Formen oder Verformen der Bewehrung 3, 4 innerhalb der der/den Schichten 2 gebildet. Hierfür ist das längliche Werkzeug 8 bevorzugt eine Nadel 8, welche einen geraden Abschnitt aufweist (nicht dargestellt).

Fig. 10 zeigt ein weiteres erläuterndes schematisches Diagramm einer seitlichen Schnittansicht des Bauteils 1 zur Erläuterung des Verfahrens und der Vorrichtung gemäß den Ausführungsformen der vorliegenden Erfindung.

In Fig. 10 sind zwei Schlingenabschnitte 5 dargestellt, welche mehrfache Umschlingungen aufweisen (siehe Fig. 1 oder 3 bis 7). Wie in Fig. 10 dargestellt können die Schlingenabschnitte 5 verschiedene Ausrichtungen aufweisen. Die verschiedenen Ausrichtungen der Schlingenabschnitte 5 können insbesondere abwechselnd gebildet werden.

Des Weiteren sind in Fig. 10 weitere gedachte Poller 24 mit Umschlingungswinkel 25 dargestellt. Diese Umschlingung ist zusätzlich zur in Fig. 9 beschriebenen Umschlingung, dargestellt durch den Umschlingungswinkel 23 in den gedachten Pollern 19.

Mit Bezug auf eine der in Fig. 10 dargestellten Schlingenabschnitte 5 (beispielsweise links in Fig. 10):

Hierbei ist eine resultierende Haftreibung multiplikativ, sodass:

$$F_2 = F_1 * e^{\mu H * (\alpha 1 + \alpha 2)}$$

Wobei "α1" den ersten Umschlingungswinkel 23 und "α2" den zweiten Umschlingungswinkel 25 darstellt.

Da das Material der Schicht 2 an beiden Umschlingungswinkel 23, 25 die gleichen Haftreibungskoeffizienten $\mu_1$, $\mu_2$ aufweist, können diese in der obigen Formel distributiv mit "μ" zusammengefasst werden, also: $\mu_1 \alpha 1 + \mu_2 \alpha 2 = \mu (\alpha 1 + \alpha 2)$, $\mu = \mu_1 = \mu_2$.

Zur Erhöhung der Umschlingungswinkel 23, 25 kann das als geöffnet dargestellte Ende des Schlingenabschnitts 5 gegenüber dem geschlossenen Ende 7 des Schlingenabschnitts 5 ebenfalls geschlossen werden. Mit anderen Worten kann ein Ende, entlang der Längserstreckungsrichtung 11, des Schlingenabschnitts 5 mit einem Anfang des Schlingenabschnitts 5 zusammengeführt werden. Mit noch anderen Worten können die Längsabschnitte 10 der Bewehrung 3, 4, zwischen welchen der Schlingenabschnitt 5 gebildet ist, miteinander in Kontakt stehen.

Zur Erhöhung der zweiten Umschlingungswinkel 25 kann der gesamte Schlingenabschnitt 5 weiter spiral- oder schneckenförmig gebildet werden, insbesondere um längere und/oder mehrere Umrundungen über die gedachten Poller 24 zu erzeugen.

Hierfür kann die Nadel 8 beispielsweise ein oder mehrere Gelenke aufweisen, mittels welchen ein Innenradius der Nadel 8 beim Ein- und Ausführen der Nadel 8 anpassbar ist, wie etwa bei einem getriebenen Knickarm.

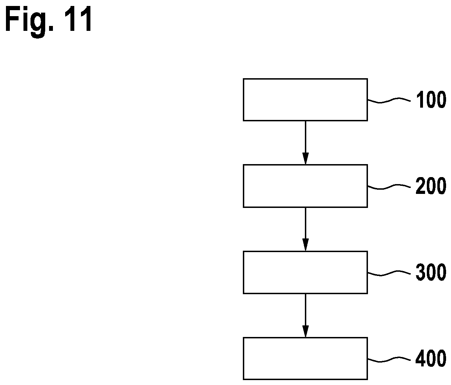

Fig. 11 zeigt ein schematisches Blockdiagramm des Verfahrens gemäß den Ausführungsformen der vorliegenden Erfindung.

Durch das nachstehend beschriebene Verfahren werden die vorstehend erläuterten Bauteile hergestellt, insbesondere additiv hergestellt.

Das Verfahren weist einen ersten Schritt 100 des Fertigens zumindest einer Schicht 2 des Bauteils 1 (siehe insbesondere Fig. 2). Die Schicht(en) 2 weisen zumindest einen Grundwerkstoff des Bauteils 1 auf.

Das Verfahren weist einen zweiten Schritt 200 des Bereitstellens zumindest einer Bewehrung 3, 4 in und/oder an zumindest einer Schicht 2 (siehe insbesondere Fig. 2). Das Bereitstellen der Bewehrung 3, 4 wird, wie in Fig. 2 dargestellt, bevorzugt zusammen bzw. gleichzeitig mit dem Fertigen der Schicht 2 (Schritt 100) durchgeführt. Alternativ oder zusätzlich dazu werden die Schritte 100 und 200 nacheinander durchgeführt, sodass zumindest eine Bewehrung 3, 4 nach dem Fertigen der Schicht 2 auf die Schicht 2 oder in die Schicht 2 gelegt wird.

Das Verfahren weist einen dritten Schritt 300 des Ausbildens des Schlingenabschnitts 5 der Bewehrung 3, 4 auf.

Dabei wird (siehe insbesondere Fig. 3 bis 6) die Bewehrung 3, 4 innerhalb der/den Schicht(en) 2 geformt oder verformt, sodass sich der Schlingenabschnitt 5 entlang der Tiefenrichtung 6 der Schicht(en) 2 erstreckt.

Hierbei sind die Schlingenabschnitte 5 insbesondere nicht vorkonfektioniert oder vorgefertigt, sondern werden innerhalb der Schicht(en) 2 durch Formen oder Verformen der Bewehrung 3, 4 ausgebildet.

Der Schritt 300 kann nach dem Schritt 200 durchgeführt werden. In dem Fall handelt es sich um ein "Verformen" der Bewehrung 3, 4, welche bereits auf und/oder in der/den Schicht(en) 2 ist.

Die Schritte 200 und 300 können zusammen bzw. gleichzeitig durchgeführt werden, beispielsweise mittels der hohlen Nadel 8 und/oder durch eine Führung der Bewehrung 3, 4 an der Nadel 8. In dem Fall handelt es sich um ein "Formen" der Bewehrung 3, 4, welche nicht bereits auf und/oder in der/den Schicht(en) 2 ist.

Die Schritte 100 bis 300 werden bevorzugt wiederholt, um das Bauteil 1 additiv herzustellen. Dabei wird bevorzugt eine Schicht 2 gefertigt (Schritt 100), eine oder mehrere Bewehrung(en) 3, 4 bereitgestellt (Schritt 200) und ein oder mehrere Schlingenabschnitt(e) 5 gebildet, woraufhin eine weitere Schicht 2 auf der vorgenannten Schicht 2 gefertigt wird.

Bei jeder Wiederholung kann die Anzahl der Bewehrungen 3, 4 und/oder der Schlingenabschnitte 5 variieren. Beispielsweise kann nur jede zweite Schicht 2 die zweiten Bewehrungen 4 mit Schlingenabschnitten 5 aufweisen, welche beispielsweise die erste Bewehrung 3 der anderen (jede zweite) Schichten 2 umschlingen.

Die Schlingenabschnitte 5 der zweiten Bewehrungen 4 können weitere Schlingenabschnitte 5 anderer zweiten Bewehrungen 4 umschlingen. Alternativ oder zusätzlich dazu (beispielsweise in Tiefenrichtung 6 oder in Längserstreckungsrichtung 11 abwechselnd) können die Schlingenabschnitte 5 der zweiten Bewehrungen 4 Längsabschnitte 10 anderer zweiter Bewehrungen 4 umschlingen.

Das Verfahren weißt außerdem bevorzugt einen weiteren Schritt 400 des Aushärtens des Grundwerkstoffs auf. Der Schritt 400 kann nach dem Ausbilden 300 von Schlingenabschnitten 5 in einer Schicht 2 und vor dem Fertigen 100 einer weiteren Schicht 2 durchgeführt werden. Alternativ oder zusätzlich dazu kann der Schritt 400 nach dem Ausbilden 300 der Schlingenabschnitte 5 in der letzten Schicht 2 des Bauteils 1 durchgeführt werden, also nach dem letzten Durchgang der Schritte 100 bis 300.

Das vorgenannte Verfahren wird insbesondere mittels der Vorrichtung zur Herstellung von Bauteilen 1, beschrieben in den Fig. 1 bis 8, durchgeführt.

Neben der vorstehenden schriftlichen Beschreibung der Erfindung wird zu deren ergänzender Offenbarung hiermit explizit auf die zeichnerische Darstellung der Erfindung in den Fig. 1 bis 11 Bezug genommen.

Zusammenfassend lässt sich die Erfindung durch die nachfolgenden Klauseln beschreiben:

Klausel 1. Verfahren zur Herstellung eines Bauteils (1), wobei das Verfahren aufweist:

- Fertigen (100) zumindest einer Schicht (2) des Bauteils (1), wobei die Schicht(en) (2) zumindest einen Grundwerkstoff des Bauteils (1) aufweist/aufweisen;
- Bereitstellen (200) zumindest einer Bewehrung (3, 4) in und/oder an zumindest einer Schicht (2); und
- Ausbilden (300) zumindest eines Schlingenabschnitts (5) der Bewehrung(en) (3, 4) durch Formen oder Verformen zumindest einer Bewehrung (3, 4) innerhalb der/den Schicht(en) (2), sodass sich der Schlingenabschnitt (5) entlang einer Tiefenrichtung (6) der Schicht(en) (2) erstreckt.

Klausel 2. Verfahren gemäß Klausel 1, wobei die Bewehrung(en) (3, 4) kontinuierlich ist/sind, sodass der Schlingenabschnitt (5) an einem Ende (7) geschlossen ist.

Klausel 3. Verfahren gemäß einem der vorherigen Klauseln, wobei, in dem Schritt (300) des Ausbildens des Schlingenabschnitts (5), die Bewehrung (3, 4) zusammen mit einem länglichen Werkzeug (8) in die Schicht(en) (2) gedrückt wird und daraufhin das Werkzeug (8) zumindest teilweise aus der/den Schicht(en) (2) herausgezogen wird.

Klausel 4. Verfahren gemäß Klausel 3, wobei das Werkzeug (8) einen bogenförmigen Abschnitt (9) aufweist.

Klausel 5. Verfahren gemäß Klausel 3 oder Klausel 4, wobei das Werkzeug (8) eine spitze Nadel (8) ist, welche insbesondere innen hohl und eingerichtet ist, innen die Bewehrung (3, 4) aufzunehmen.

Klausel 6. Verfahren gemäß einem der vorherigen Klauseln, wobei die Bewehrung (3, 4) außerhalb des Schlingenabschnitts (5) zumindest einen Längsabschnitt (10) mit einer Längserstreckungsrichtung (11) aufweist und wobei, in dem Schritt (300) des Ausbildens des Schlingenabschnitts (5), der Schlingenabschnitt (5), in einer Draufsicht parallel zur Tiefenrichtung (6) auf eine Oberfläche (13) der Schicht(en) (2), mit einem Nickwinkel (14) zur Längserstreckungsrichtung (11) des Längsabschnitts (10) ausgebildet wird.

Klausel 7. Verfahren gemäß einem der vorherigen Klauseln, wobei, in den Schritten (100, 200) des Fertigens und des Bereitstellens, zumindest eine Bewehrung (3, 4) integral mit dem Grundwerkstoff oder getrennt von dem Grundwerkstoff zugeführt und bereitgestellt wird.

Klausel 8. Verfahren gemäß einem der vorherigen Klauseln, wobei die Schritte des Fertigens (100) der Schicht (2), des Bereitstellens (200) der Bewehrung (3, 4) und des Ausbildens (300) des Schlingenabschnitts (5) wiederholt werden, wobei die Schritte des Ausbildens (300) des Schlingenabschnitts (5) insbesondere zwischen dem jeweiligen Fertigen (100) von mehreren Schichten (2) durchgeführt werden.

Klausel 9. Verfahren gemäß einem der vorherigen Klauseln, wobei zumindest ein Schlingenabschnitt (5) zumindest einer der Bewehrungen (4) zumindest eine weitere Bewehrung (3, 4) zumindest teilweise umschlingt.

Klausel 10. Vorrichtung zur Herstellung von Bauteilen (1), aufweisend:

- zumindest eine Druckvorrichtung (20), welche eingerichtet ist, zumindest eine Schicht (2) aus zumindest einem Grundwerkstoff des Bauteils (1) zuzuführen;
- zumindest eine Bewehrungszufuhrvorrichtung (21), welche eingerichtet ist, zumindest eine Bewehrung (3, 4) in und/oder an der/den Schicht(en) (2) anzuordnen; und
- eine Schlingenbildungsvorrichtung (8), welche eingerichtet ist, zumindest eine Bewehrung (3, 4), insbesondere abschnittsweise, in eine Tiefe (6) der Schicht(en) (2) zu drücken und innerhalb der/den Schicht(en) (2) zu formen oder zu verformen, sodass die Bewehrung(en) (3, 4) einen Schlingenabschnitt (5) aufweist/aufweisen.

Bezugszeichenliste

| | |
|---|---|
| 1 | Bauteil |
| 2 | Schicht |
| 3 | erste Bewehrung |
| 4 | zweite Bewehrung |
| 5 | Schlingenabschnitt |
| 6 | Tiefenrichtung |
| 7 | geschlossenes Ende des Schlingenabschnitts |
| 8 | Werkzeug/Nadel |
| 9 | bogenförmiger Abschnitt des Werkzeugs |
| 10 | Längsabschnitt der Bewehrung |
| 11 | Längserstreckungsrichtung der Längsabschnitte |
| 12 | Richtung senkrecht zur Tiefe und zur Längserstreckungsrichtung der Längsabschnitte |
| 13 | Oberfläche der Schicht |
| 14 | Nickwinkel |
| 15 | Kopplungsstelle des Werkzeugs |
| 16 | Drehachse |
| 17 | Längserstreckungsrichtung des Werkzeugs |
| 18 | Öffnung des Werkzeugs |
| 19 | gedachter Poller |
| 20 | Druckvorrichtung |
| 21 | Bewehrungszufuhrvorrichtung |
| 22 | Behälter für Grundwerkstoff |
| 23 | erster Umschlingungswinkel |
| 24 | gedachter Poller |
| 25 | zweiter Umschlingungswinkel |
| 100 | Schritt des Fertigens der Schicht |
| 200 | Schritt des Bereitstellens der Bewehrung |
| 300 | Schritte des Ausbildens des Schlingenabschnitts |
| 400 | Schritt des Aushärtens des Grundwerkstoffs |

**Patentansprüche**

1. Verfahren zur Herstellung eines Bauteils (1), wobei das Verfahren aufweist:

   • Fertigen (100) zumindest einer Schicht (2) des Bauteils (1), wobei die Schicht(en) (2) zumindest einen Grundwerkstoff des Bauteils (1) aufweist/aufweisen;
   • Bereitstellen (200) zumindest einer Bewehrung (3, 4) in und/oder an zumindest einer Schicht (2); und
   • Ausbilden (300) zumindest eines Schlingenabschnitts (5) der Bewehrung(en) (3, 4) durch Formen oder Verformen zumindest einer Bewehrung (3, 4) innerhalb der/den Schicht(en) (2), sodass sich der Schlingenabschnitt (5) entlang einer Tiefenrichtung (6) der Schicht(en) (2) erstreckt.

2. Verfahren gemäß Anspruch 1, wobei die Bewehrung(en) (3, 4) kontinuierlich ist/sind, sodass der Schlingenabschnitt (5) an einem Ende (7) geschlossen ist.

3. Verfahren gemäß einem der vorherigen Ansprüche, wobei, in dem Schritt (300) des Ausbildens des Schlingenabschnitts (5), die Bewehrung (3, 4) zusammen mit einem länglichen Werkzeug (8) in die Schicht(en) (2) gedrückt wird und daraufhin das Werkzeug (8) zumindest teilweise aus der/den Schicht(en) (2) herausgezogen wird.

4. Verfahren gemäß Anspruch 3, wobei das Werkzeug (8) einen bogenförmigen Abschnitt (9) aufweist und in dem Schritt (300) des Ausbildens des Schlingenabschnitts (5) ein Schlingenabschnitt (5) mit einer mehrfachen Schlinge gebildet wird.

5. Verfahren gemäß Anspruch 4, wobei das Werkzeug (8) in dem Schritt (300) des Ausbildens des Schlingenabschnitts (5) um eine Drehachse (16) gedreht wird, um die Bewehrung(en) (3, 4) in die Tiefenrichtung (6) zu drücken.

6. Verfahren gemäß einem der Ansprüche 3 bis 5, wobei das Werkzeug (8) eine spitze Nadel (8) ist, welche insbesondere innen hohl und eingerichtet ist, innen die Bewehrung (3, 4) aufzunehmen, und wobei das Bereitstellen (200) und das Ausbilden (300) gleichzeitig durchgeführt werden.

7. Verfahren gemäß einem der vorherigen Ansprüche, wobei die Bewehrung (3, 4) außerhalb des Schlingenabschnitts (5) zumindest einen Längsabschnitt (10) mit einer Längserstreckungsrichtung (11) aufweist und wobei, in dem Schritt (300) des Ausbildens des Schlingenabschnitts (5), der Schlingenabschnitt (5), in einer Draufsicht parallel zur Tiefenrichtung (6) auf eine Oberfläche (13) der Schicht(en) (2), mit einem Nickwinkel (14) zur Längserstreckungsrichtung (11) des Längsabschnitts (10) ausgebildet wird.

8. Verfahren gemäß einem der vorherigen Ansprüche, wobei, in den Schritten (100, 200) des Fertigens und des Bereitstellens, zumindest eine Bewehrung (3, 4) integral mit dem Grundwerkstoff oder getrennt von dem Grundwerkstoff zugeführt und bereitgestellt wird.

9. Verfahren gemäß einem der vorherigen Ansprüche, wobei die Schritte des Fertigens (100) der Schicht (2), des Bereitstellens (200) der Bewehrung (3, 4) und des Ausbildens (300) des Schlingenabschnitts (5) wiederholt werden, wobei die Schritte des Ausbildens (300) des Schlingenabschnitts (5) insbesondere zwischen dem jeweiligen Fertigen (100) von mehreren Schichten (2) durchgeführt werden.

10. Verfahren gemäß einem der vorherigen Ansprüche, wobei zumindest ein Schlingenabschnitt (5) zumindest einer der Bewehrungen (4) zumindest eine weitere Bewehrung (3, 4) zumindest teilweise umschlingt.

11. Vorrichtung zur Herstellung von Bauteilen (1), aufweisend:

   • zumindest eine Druckvorrichtung (20), welche eingerichtet ist, zumindest eine Schicht (2) aus zumindest einem Grundwerkstoff des Bauteils (1) zuzuführen;
   • zumindest eine Bewehrungszufuhrvorrichtung (21), welche eingerichtet ist, zumindest eine Bewehrung (3, 4) in und/oder an der/den Schicht(en) (2) anzuordnen; und
   • eine Schlingenbildungsvorrichtung (8), welche eingerichtet ist, zumindest eine Bewehrung (3, 4), insbesondere abschnittsweise, in eine Tiefe (6) der Schicht(en) (2) zu drücken und innerhalb der/den Schicht(en) (2) zu formen oder zu verformen, sodass die Bewehrung(en) (3, 4) einen Schlingenabschnitt (5) aufweist/aufweisen.

12. Vorrichtung gemäß Anspruch 11, wobei die Schlingenbildungsvorrichtung (8) einen bogenförmigen Abschnitt (9) aufweist und wobei die Schlingenbildungsvorrichtung (8) eingerichtet ist, die zumindest eine Bewehrung (3, 4) in die Tiefe (6) der Schicht(en) (2) durch eine Drehung zu drücken.

## Fig. 1

## Fig. 2

# Fig. 3

# Fig. 4

## Fig. 5

## Fig. 6

**Fig. 7**

**Fig. 8**

**Fig. 9**

**Fig. 10**

Fig. 11

**Europäisches Patentamt**
**European Patent Office**
**Office européen des brevets**

# EUROPÄISCHER RECHERCHENBERICHT

**Nummer der Anmeldung**

**EP 23 18 3668**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/170670 A1 (BARR CHRISTIAN G [US] ET AL) 10. Juni 2021 (2021-06-10) | 1-3,6,8, 9,11 | INV. B28B1/00 |
| A | * Absatz [0022] - Absatz [0026]; Abbildung 2 * | 4,5,7, 10,12 | B28B23/02 B33Y10/00 |
| | ----- | | E04G21/04 |
| X | RU 2 704 995 C1 (GRYUAR LUI ANDRE KRISTOF ZHISLEN [RU]) 1. November 2019 (2019-11-01) | 1-3,6,8, 9,11 | B28B23/00 B29C64/106 B29C64/194 |
| A | * Abbildungen 11-17 * | 4,5,7, 10,12 | |
| | ----- | | |
| X,D | DE 10 2017 126345 A1 (PERI GMBH [DE]) 16. Mai 2019 (2019-05-16) | 1-3,6,8, 9,11 | |
| A | * Absatz [0012] - Absatz [0021]; Abbildungen * | 4,5,7, 10,12 | |
| | ----- | | |

**RECHERCHIERTE SACHGEBIETE (IPC)**

B28B
E04G
B33Y
B29C

Der vorliegende Recherchenbericht wurde für alle Patentansprüche erstellt

| Recherchenort | Abschlußdatum der Recherche | Prüfer |
|---|---|---|
| Den Haag | 13. November 2023 | Orij, Jack |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 18 3668

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-11-2023

| Im Recherchenbericht angeführtes Patentdokument | Datum der Veröffentlichung | Mitglied(er) der Patentfamilie | Datum der Veröffentlichung |
|---|---|---|---|
| US 2021170670 A1 | 10-06-2021 | US 2021170670 A1 | 10-06-2021 |
| | | US 2022161487 A1 | 26-05-2022 |
| RU 2704995 C1 | 01-11-2019 | KEINE | |
| DE 102017126345 A1 | 16-05-2019 | DE 102017126345 A1 | 16-05-2019 |
| | | WO 2019092169 A1 | 16-05-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170182712 A1
- DE 102017126345 A1
- US 20200353678 A1
- DE 102020120895 A1
- DE 102017221661 A1
- AT 520143 A1
- EP 3431172 A1